# FASCICULE DE BREVET EUROPEEN

(11) **EP 0 788 174 B1**
(45) Date de publication et mention de la délivrance du brevet: **21.11.2001**
(21) Numéro de dépôt: 97400290.9
(22) Date de dépôt: 10.02.1997
(51) Int. Cl.: H01M 8/10, H01M 4/88

(54) **Procédé de préparation d'électrodes pour piles à combustible à membrane, électrodes à gaz et pour de telles piles et piles PEMFC les contenant**
Verfahren zur Herstellung Elektroden für Membranbrennstoffzellen, Gasdiffusionselektroden für solche Zellen und solche Elektroden enthaltende PEMFC - Brennstoffzellen
Process of manufacturing electrodes for membrane fuel cells, gasdiffusion electrodes for such cells and PEMFC containing them

(30) Priorité: 12.02.1996 FR 9601691
(43) Date de publication de la demande: 06.08.1997
(73) Titulaire: COMMISSARIAT A L'ENERGIE ATOMIQUE, 75015 Paris Cédex 15 (FR); RENAULT, 92109 Boulogne-Billancourt (FR); AUTOMOBILES PEUGEOT, 75016 Paris (FR); AUTOMOBILES CITROEN, 92200 Neuilly-sur-Seine (FR)
(72) Inventeur: Antoine, Olivier, 38000 Grenoble (FR); Durand, Robert, 38400 St. Martin d'Hères (FR); Gloaguen, Frédéric, Appartement 33, 86360 Chasseneuil-du-Poitou (FR); Novel Cattin, Frédéric, 92500 Rueil-Malmaison (FR)
(74) Mandataire: Casalonga, Axel

(56) Documents cités:
- DE-A- 3 710 168
- US-A- 5 084 144
- US-A- 5 284 571

## Description

La présente invention concerne un procédé de préparation d'électrodes pour piles à combustible à membrane échangeuse de protons, une électrode pour pile à combustible à membrane échangeuse de protons ou une électrode à gaz, et une pile PEMFC.

Devant l'augmentation rapide du trafic urbain dans les grandes métropoles, le remplacement, dans les véhicules automobiles, du moteur à explosion par un moteur électrique de rendement énergétique élevé et de fonctionnement silencieux et non polluant, est un enjeu important. Il convient pour cela de produire des générateurs électriques autonomes, fiables et de faible coût. Les accumulateurs électriques peuvent jouer ce rôle, mais la durée de leur recharge impose une longue immobilisation du véhicule. De plus, les énergies volumiques et massiques des accumulateurs limitent leur autonomie et les réservent à un usage urbain.

Les piles à combustible, et notamment les piles hydrogène/air sont d'une utilisation plus souple, car similaire à celle d'un moteur thermique : le coeur de pile produit de l'électricité en continu dès qu'il est approvisionné en combustible (hydrogène) par un réservoir annexe. Les piles à combustible associées à des moteurs électriques constituent la meilleure alternative à l'utilisation du moteur à explosion pour les véhicules automobiles.

Dans le domaine des piles fonctionnant à basse température, c'est-à-dire entre la température ambiante et 200°C, les piles à combustible à membrane échangeuse de protons (PEMFC) apparaissent, pour le couple hydrogène/air, comme des générateurs électrochimiques bien adaptés à une application aux véhicules électriques. L'intérêt de la technologie des PEMFC réside notamment dans la compacité et la simplicité de l'assemblage : le collage de deux électrodes de carbone platiné de part et d'autre d'une membrane conduit à des cellules dont l'épaisseur peut ne pas dépasser 0,5 cm.

De façon générale, les électrodes poreuses à gaz utilisées dans les piles à combustible à membrane échangeuse de protons sont constituées d'au moins deux couches :
- une couche de diffusion, souvent non homogène, servant d'amenée de courant et de support mécanique à l'électrode et permettant une bonne répartition des gaz vers la couche active; elle peut être constituée de tissu de carbone où sont déposés du PTFE et de la poudre de carbone, par exemple;
- une couche active contenant le catalyseur et l'électrolyte. C'est là que se déroule la réaction électrochimique proprement dite.

La couche de diffusion des gaz doit permettre un approvisionnement continu en gaz de la couche active. Elle doit être hydrophobe pour éviter que les pores qui la constituent ne soient noyés par l'eau amenée par les gaz ou l'eau formée lors de la réaction électrochimique.

Le dépôt sur le support est souvent constitué d'un mélange de poudre de carbone et d'un agent plastique hydrophobe, en général du polytétrafluoréthylène (PTFE), dans des quantités pouvant atteindre 40% en poids.

La couche active est constituée de noir de carbone ou de poudre de graphite qui supporte le catalyseur, et d'électrolyte solide.

Dans le cas de l'utilisation du platine comme catalyseur, compte tenu de son coût et des réserves mondiales, il est apparu très important d'utiliser le catalyseur de la meilleure façon possible.

Pour fabriquer des électrodes, on réalise usuellement sur un support de carbone, par exemple en feuille, un dépôt de carbone préalablement platiné, mélangé à l'électrolyte et à de petites quantités de polytétrafluoroéthylène, avant de chauffer et presser l'ensemble pour obtenir une électrode.

Ce type de méthode assure en général la percolation électronique entre les grains de carbone, pourvu que la proportion de carbone en volume soit suffisante.

Ce procédé usuel ne permet toutefois pas de réaliser à l'intérieur de l'électrode le contact du matériau membranaire (électrolyte), avec la totalité de la surface des particules de platine. Et, dans les électrodes actuelles, le catalyseur précieux mis en oeuvre qu'est le platine n'est utilisé que très partiellement, par exemple à hauteur de 20%.

L'alternative constituée par le dépôt électrochimique du catalyseur in situ présente l'avantage que la percolation électronique entre les grains de carbone a bien lieu et la percolation ionique est assurée par le polymère entre les particules de platine et la membrane.

Le rapport massique Pt/C+Pt que l'on obtient usuellement par dépôt électrochimique in situ ne dépasse pas 5 à 10%. Or, le rapport massique Pt/C+Pt doit être assez élevé (plus de 20%, de l'ordre de 20 à 50%) pour permettre de diminuer l'épaisseur de la couche active.

Ainsi, le dépôt électrochimique in situ de platine à l'intérieur d'électrodes préconstituées carbone + Nafion en utilisant des cations Pt(NH₃)₄²⁺ est décrit au brevet US 5 084 144. On obtient par ce procédé des particules de platine inférieures à 5 nm. Il est cependant apparu que le rapport Pt/C+Pt est insuffisant et les résultats obtenus en cathode à oxygène sont médiocres. Le chargement de platine ne dépasse pas 0,05 mg/cm². L'utilisation de sels cationiques de platine pour les dépôts in situ ne permet donc pas de préparer pour le moment des cathodes de piles à combustible à membrane échangeuse de protons ayant des performances acceptables.

La demanderesse a maintenant mis au point un procédé de préparation d'électrodes pour piles à combustible à membrane, par mélange de carbone et d'une solution ionomère, dépôt du mélange sur un support carboné et chauffage, caractérisé en ce que :
1) le carbone est préimprégné avec une solution d'anions ou de cations du platine, avant le mélange et le dépôt sur le support, et
2) on réalise la réduction du platine par voie électrochimique en utilisant l'électrode constituée comme cathode dans une électrolyse avec un électrolyte aqueux.

Par la mise en oeuvre du procédé selon l'invention, il est possible d'obtenir des dépôts in situ de platine pour lesquels le pourcentage Pt/Pt+C peut dépasser 20% sur une épaisseur de l'ordre de 10 à 20 µm avec des particules de taille homogène (2 à 5 nm), le chargement en platine pouvant atteindre quelques mg/cm².

Par constitution d'une électrode, on entend selon l'invention tout procédé usuel de fabrication d'électrode utilisé dans la technique des piles à combustible à électrolyte polymère solide, ou d'électrode à gaz.

Comme carbone, on peut utiliser selon l'invention par exemple du noir de carbone ou de la poudre de graphite.

Le noir de carbone est connu comme support de catalyseur pour des applications aux piles à combustible. On peut utiliser du noir de carbone ayant une aire spécifique d'environ 250 m²/g, les grains de carbone ayant entre quelques centaines de nm et quelques µm de diamètre. La Société CABOT commercialise un tel produit sous le nom VULCAN.

La poudre de graphite utilisable possède une aire spécifique de 300 m²/g, les feuillets de graphite ayant des dimensions comprises entre quelques centaines de nm et quelques µm.

Par carbone préimprégné, on entend selon l'invention que la poudre de carbone, éventuellement préalablement activée, est mise en présence avec une solution de sel anionique ou cationique de platine. La concentration de sel de platine dans la solution peut être variable, selon le rapport Pt/Pt+C massique que l'on souhaite obtenir.

La solution de préimprégnation est, selon une variante, une solution comportant des anions du type PtCl₆²⁻.

La préimprégnation a lieu pendant une durée de l'ordre de quelques heures. Cette durée dépend de la poudre et des prétraitements qui ont précédé l'imprégnation.

En effet, dans le cas de préimprégnation par une solution anionique, on prétraite éventuellement le carbone par un traitement d'activation au dioxyde de carbone. Pour la préimprégnation par une solution cationique, on prétraite le carbone par de l'eau de Javel ou de l'acide nitrique.

De plus, on peut envisager d'utiliser du carbone préplatiné.

Par solution ionomère conduisant par chauffage à l'électrolyte solide de l'électrode, on entend les solutions alcooliques d'ionomère usuelles réalisées à partir des membranes à structure perfluorée, du type PTFE, sur laquelle sont accrochés, de façon plus ou moins dense, des motifs chimiques de longueur variable au bout desquels sont placés les groupements ioniques échangeurs de protons : SO₃⁻ pour ce qui est du Nafion commercialisé par DuPont de Nemours. On peut utiliser toute membrane perfluorée sulfonique ayant une masse équivalente comprise entre 900 et 1500.

Selon l'invention, l'électrolyte aqueux utilisé pour la réduction du platine après formation de l'électrode ne contient de préférence pas de sels de platine. Il est toutefois possible d'en utiliser, sous forme d'acide ou de sel de potassium ou de sodium.

De préférence, on utilise, à titre de solution électrolyte, des solutions acides de molarité supérieure à 0,1M.

L'invention a également pour objet une électrode pour pile à combustible ou une électrode à gaz comportant une couche active contenant un catalyseur platiné et un électrolyte ionomère, dans laquelle le rapport Pt/Pt+C vaut au moins 20% et le pourcentage de Pt au contact avec l'ionomère et le carbone est de l'ordre de 100%, ainsi qu'une pile PEMFC comportant une telle électrode.

La présente invention sera mieux comprise à la lecture des exemples ci-après.

### Exemple de fabrication usuelle d'une électrode.

On réalise dans un premier temps un prétraitement des poudres de carbone par traitement thermique. Ce traitement consiste en une montée progressive de la température jusqu'à 930°C, suivi d'un retour à la température ambiante. La durée du palier à 930°C dépend de la quantité de poudre à traiter ainsi que du débit de CO₂ : pour traiter 1 g le palier est d'environ deux heures.

50 mg de poudres de carbone platiné sont mélangées à 1 g de solution alcoolique à 5% en masse de Nafion H⁺ (du Pont), 150 mg de triéthylphosphate (TEP) et 5 ml d'eau ultrapure. Le tout est agité aux ultrasons. En fonction de l'épaisseur de couche souhaitée, un volume mesuré de ce mélange est déposé sur un disque de carbone vitreux (Carbone Lorraine) de diamètre 5 mm ou sur une plaque de tissu de graphite (Toray paper) pour former, après évaporation des solvants les plus volatils (l'alcool et l'eau) à l'étuve à 80°C, une électrode volumique contenant en volume 50% de poudre de carbone platiné et 50% de Nafion. Ces électrodes sont ensuite recuites à 150°C pendant 15 minutes pour éliminer le TEP et reconstituer le Nafion.

### Exemple 1

La poudre de carbone (type Vulcan XC-72 de Cabot), après activation sous CO₂ à 930°C, est préimprégnée avec une solution H₂PtCl₆ 0,01M pendant 12 heures. Après fabrication d'une électrode volumique, dont la couche active a une épaisseur de 1 à 2 µm, celle-ci est mise en contact avec une solution H₂PtCl₆ 0,01M + H₂SO₄ 1M pendant quelques minutes; en imposant des sauts de potentiel ou de courant pendant des temps inférieurs ou égaux à 1 seconde, on obtient des particules de Pt de très petites tailles (inférieures ou égales à 3 nm) et en grand nombre.

### Exemple 2

Pour obtenir des fractions massiques d'au moins 20%, tout en gardant des tailles de particules de 2 à 5 nm et l'utilisation d'impulsions à densité de courant constant d'amplitude modérée, impulsions faciles à réaliser à une échelle industrielle, on réalise le mélange suivant pour des électrodes de test de petites dimensions :
- 50 mg de carbone (Vulcan XC 72) traité à 930°C sous CO₂ (perte de masse : 30%),
- 5 ml de solution aqueuse de H₂PtCl₆ de concentration variable, selon le rapport Pt/Pt + C en masse recherché,
- 1 g de solution alcoolique d'ionomère (ex. : 50 mg de Nafion),
- 1 ml de propanol.

La proportion en volume obtenue pour le carbone et pour l'ionomère (Nafion) est de 50% pour chacun de ces composants.

Suivant la porosité recherchée pour l'électrode (pores à gaz ou non), on peut ajouter un solvant à haut point de fusion (triéthylphosphate par exemple), dont l'emploi abaisse la porosité.

Le traitement de préimprégnation du carbone est suivi par la décoloration plus ou moins complète de la solution de préimprégnation. Le mélange est ensuite passé aux ultrasons pour l'homogénéiser, puis l'électrode est obtenue sur support carboné par chauffage à l'étuve jusqu'à 150°C.

La couche active ainsi obtenue doit être réhydratée avant passage du courant : on utilise pour cela une faible quantité d'acide sulfurique 1M, de façon à ne pas perdre de composé imprégné sur le carbone. Puis les impulsions de courant sont appliquées dès passage dans la cellule contenant une solution H₂SO₄ 1M à température ordinaire.

On a ainsi obtenu un rapport Pt/(Pt+C) de 20% en masse en appliquant
- une impulsion de 500 mA/cm² pendant 0,1 s
- une impulsion de 50 mA/cm² pendant 1 s soit
- deux impulsions de 50 mA/cm² pendant 1 s.

On a également obtenu un rapport Pt/(Pt+C) de 40% en masse en appliquant
- une impulsion de 100 mA/cm² pendant 0,1 s
- cinq impulsions de 50 mA/cm² pendant 1 s.

## Revendications

1. Procédé de préparation d'électrodes pour piles à combustible à membrane et d'électrodes à gaz, par mélange de carbone et d'une solution ionomère, dépôt du mélange sur un support carboné, **caractérisé en ce que** :
1) le carbone est préimprégné avec une solution d'anions ou de cations du platine, avant le mélange et le dépôt sur le support, et
2) on réalise la réduction du platine par voie électrochimique en utilisant l'électrode constituée comme cathode dans une électrolyse avec un électrolyte aqueux.

2. Procédé selon la revendication 1, **caractérisé en ce que** la solution de préimprégnation est une solution comportant des anions du type PtCl₆²⁻.

3. Procédé selon la revendication 1 ou 2, **caractérisé en ce que** l'électrolyte aqueux est une solution acide de concentration supérieure à 0,1 mole/litre.

4. Procédé selon l'une des revendications 1 à 3, **caractérisé en ce que** l'électrolyte ne contient pas de sels de platine avant l'électrolyse.

5. Procédé selon l'une des revendications 1 à 4, **caractérisé en ce que** la solution d'ionomère est constituée d'une solution alcoolique de polytétrafluoroéthylène sur lequel sont greffés des radicaux SO₃H.

6. Procédé selon l'une des revendications 1 à 5, **caractérisé en ce que** le carbone est préalablement traité par activation au CO₂ ou par de l'eau de Javel ou de l'acide nitrique.

7. Electrode pour pile à combustible ou électrode à gaz comportant une couche active contenant un catalyseur platiné et un électrolyte ionomère, **caractérisée en ce que** le rapport Pt/Pt+C vaut au moins 20% et le pourcentage de Pt au contact avec l'ionomère et le carbone est de l'ordre de 100%.

8. Pile PEMFC comportant au moins une électrode selon la revendication 7.

## Patentansprüche

1. Verfahren zur Herstellung von Elektroden für Membranbrennstoffzellen und von Elektroden für Gas, indem Kohlenstoff mit einer Ionomerlösung gemischt und die Mischung auf einem Träger aufgebracht wird, **dadurch gekennzeichnet, dass**
1) der Kohlenstoff vor dem Mischen und dem Aufbringen auf dem Träger mit einer Lösung von Platinanionen oder Platinkationen vorimprägniert wird und
2) das Platin auf elektrochemischem Weg reduziert wird, indem die so gebildete Elektrode als Kathode in einer Elektrolyse mit einem wässerigen Elektrolyten verwendet wird.

2. Verfahren nach Anspruch 1, **dadurch gekennzeichnet, dass** das Mittel für die Vorimprägnierung eine Lösung ist, die Anionen des Typs PtCl₆²⁻ enthält.

3. Verfahren nach Anspruch 1 oder 2, **dadurch gekennzeichnet, dass** der wässerige Elektrolyt eine saure Lösung in einer Konzentration von mehr als 0,1 Mol/Liter ist.

4. Verfahren nach einem der Ansprüche 1 bis 3, **dadurch gekennzeichnet, dass** der Elektrolyt vor der Elektrolyse frei von Platinsalzen ist.

5. Verfahren nach einem der Ansprüche 1 bis 4, **dadurch gekennzeichnet, dass** die Ionomerlösung von einer alkoholische Lösung von Polytetrafluorethylen gebildet wird, dem SO₃H-Radikale hinzugefügt sind.

6. Verfahren nach einem der Ansprüche 1 bis 5, **dadurch gekennzeichnet, dass** der Kohlenstoff mit CO₂ oder mit Eau de Javel oder mit Salpetersäure aktiviert wird.

7. Elektrode für Brennstoffzellen oder für Gas, mit einer aktiven Schicht, die einen Platin-Katalysator und einen Ionomerelektrolyten enthält, wobei die Schicht **dadurch gekennzeichnet ist, dass** ihr Gehalt an Pt/Pt+C wenigstens 20% beträgt und, dass das Platin im Wesentlichen zu 100% mit dem Ionomer und dem Kohlenstoff in Berührung steht.

8. PEMFC-Zelle, die wenigstens eine Elektrode nach Anspruch 7 enthält.

## Claims

1. Process for producing electrodes for membrane fuel cells and gas electrodes, by mixing carbon and an ionomer solution, and depositing the mixture on a carbon support, **characterized in that**:
1) the carbon is preimpregnated with a solution of platinum anions or cations, before mixing and deposition on the support; and
2) the platinum is reduced electrochemically using the electrode formed as cathode in an electrolysis with an aqueous electrolyte.

2. Process according to Claim 1, **characterized in that** the preimpregnation solution is a solution containing anions of the PtCl₆²⁻ type.

3. Process according to Claim 1 or 2, **characterized in that** the aqueous electrolyte is an acid solution having a concentration of greater than 0.1 mol/litre.

4. Process according to one of Claims 1 to 3, **characterized in that** the electrolyte does not contain platinum salts before the electrolysis.

5. Process according to one of Claims 1 to 4, **characterized in that** the ionomer solution consists of an alcoholic solution of polytetrafluoroethylene onto which SO₃H radicals are grafted.

6. Process according to one of Claims 1 to 5, **characterized in that** the carbon is pretreated with CO₂ activation or with bleach or nitric acid.

7. Electrode for a fuel cell or a gas electrode, comprising an active layer containing a platinized catalyst and an ionomer electrolyte, **characterized in that** the Pt/Pt+C ratio is at least 20% and the percentage of Pt in contact with the ionomer and the carbon is about 100%.

8. PEMFC cell comprising at least one electrode according to Claim 7.
